# EUROPEAN PATENT APPLICATION

(11) **EP 2 728 534 A1**
(43) Date of publication of application: **07.05.2014**
(21) Application number: 12190926.1
(22) Date of filing: 31.10.2012
(51) Int. Cl.: G06Q 30/02

(54) **Value Control**

(71) Applicant: Symmetric Transactions AG, 6304 Zug (CH)
(72) Inventor: Vines, Peter, London, Greater London W1B 1PE (GB); Seidel, Carlo, London, Greater London W1B 1PE (GB)
(74) Representative: Thorniley, Peter

(57) **Abstract**

A system and method are provided which enable the value of a transaction to be controlled according to the participants involved. When a transaction is carried out, the applied value of the transaction can be calculated on the basis of a user score associated with an account of first network participant making the transaction request. A method and apparatus are also provided which allow the first network participant to obtain an estimated value of a transaction before the transaction occurs.

## Description

### Field of the Invention

The present invention relates to the management of transactions between parties. In particular, but not exclusively, the present invention relates to the ability to allow transaction values to be personalised for particular participants in a network.

### Background to the Invention

A number of factors have driven the rapid growth of internet communications in recent decades. New implementations and applications are developed to take advantage of technological advances in infrastructure and access to the internet, and in turn these feed the desire for further technological progress. Today, access to the internet is becoming increasingly ubiquitous, and more particularly internet access is increasingly 'always on', so that individuals have come to expect that the opportunities the internet provides are available in many different circumstances and at all times.

As the proportion of individuals' experiences that are carried out online, or at least in contact with the online world, increases, it has been recognised that this offers a valuable data stream which may provide revenue for free or near-free online services. This has led to new business models, with some of those that are successful appreciating the value to advertisers of their users' data. For example, search or social networking sites can offer advertisers the chance to reach users which are considered to be particularly valuable on the basis of those users' activities.

While such approaches have found success on occasion, their applicability tends to be limited to online service providers and not enterprises providing more conventional goods or services. Furthermore, even for commercial enterprises of this type there is not always the opportunity for sufficient revenue. In truth, the ultimate transaction model between users and the providers of goods and services has remained wedded for the most part to traditional practices. A niche in which advertising is designed to give the impression of personalisation has been created (i.e. personal data has been used to target individuals for commercial purposes), but this is merely a façade behind which conventional customer-producer relationships still persist.

In particular, current efforts at personalisation are generally limited to advertising and are typically one-sided in the sense that control over the process almost always resides with the advertiser. In this regard, online personalisation efforts are merely an extension of the choice to advertise in certain media outlets that appeal to certain customers or demographics which has always been a function of traditional 20^{th} century mass communication. Online customers are aware that their information is being harvested to the advantage of others, and since they gain no benefit directly can resent this. As there is no incentive for the customer to engage in this process, they may take steps to inhibit it. For example, customer pressure may require online service providers to offer privacy settings that minimise the information shared, or customers may deliberately block advertising served to them online.

There is also a paradox in the increasing use of mobile access to the internet. While this increases the time that customers are exposed to the internet, it also changes the mechanism by which this occurs. Specifically, the amount of screen real estate available for advertising is significantly decreased in mobile devices. Whereas it is common in desktop or even laptop computers for a user's web experience not to require the entire screen, this is less likely in the context of a mobile phone or tablet computer. As a result, advertising in mobile devices can feel more intrusive to the customer. Mobile devices potentially offer improved mechanisms for harvesting information relevant to a user (such as, for example, their location) but at the same time increase customer resistance to the use of this information.

The failure of advertising models designed for 20^{th} century mass communication to be effectively transferred to the internet age has led to efforts by major players to find other sources of revenue. For example, many internet service businesses are looking at playing an active role in the transaction process, and generating revenue by commission on each transaction. This active role can take different commercial or technological forms, from the provision of an online marketplace to the development and implementation of near-field communication technologies for payment.

It is becoming increasingly apparent that the model in which internet service businesses merely offer platforms for advertising often does not satisfy the needs of the advertisers and by extension the internet service businesses themselves. Customers have no incentive to engage; in fact, they have more choice than ever before, which gives them the chance to disengage where they wish. The 20^{th} century mass communication model of advertising is no longer appropriate in a world of individual networked connections.

### Summary of the Invention

According to a first aspect of the present invention, there is provided a method for facilitating online transactions, comprising:
- maintaining a first account for a first network participant, the first account being associated with a user score determined at least in part on behaviour of the first network participant;
- maintaining a second account for a second network participant;
- receiving a transaction request from a network device associated with the first network participant, the transaction request defining a transaction between the first and second network participants; and
- applying the transaction request to the first and second accounts, wherein an applied value of the transaction applied to the first and second accounts is calculated in dependence on the user score.

In accordance with the present invention, as a transaction takes place, its value can be controlled according to a user score associated with one of the participants in the transaction. Thus, the transaction can be personalised to that participant. In particular, a second network participant can offer a certain incentive to a first participant in dependence on their user score.

Accordingly, a transaction may be open to many different participants, but its value may be controlled for each of those participants depending on their user score. In this way, there is no requirement to individually develop transactions that are appropriate for each user, but at the same time it is no longer necessary to value all users equally.

The present invention can provide an incentive for the first network participant to reveal information about themselves via their user score since this can improve the terms of the transaction. Thus, the first network participant is more likely to engage with the transaction process and the second network participant is more likely to receive intelligence regarding the first network participant.

The user score comprises a model of the user's behaviour. Such a model may be reduced to a single numerical value, or may comprise a sequence of values or more complex modelling of user behaviour. For example, the user score may indicate the first network participant's propensity for premium products, or the frequency of transactions by the first network participant. In addition to user behaviour, the user score may also depend on other user attributes, such as demographic data or information regarding the user's current location.

Preferably, the applied value of the transaction is calculated after receipt of the transaction request. Accordingly, the applied value may be current and reflect the latest changes in the user score. Furthermore, a value algorithm used to calculate the applied value may be time-varying, so that it reflects the current requirements of the second network participant. As such, transactions may be personalised not only to an individual but also to a specific occasion. In this manner, the transaction can be optimised to the needs of both network participants on that particular occasion.

Preferably, the method further comprises calculating, prior to the receipt of the transaction request, an estimated value of the transaction in dependence on the user score, and transmitting the estimated value to the network device. In this manner, the first network participant may be informed of the value of the transaction prior to choosing to engage. For example, a company may offer a preferential rate for goods or services in dependence on the user score of a network participant.

The applied value of the transaction may be fixed to the estimated value or may be re-calculated when the transaction request is received. For example, a time period may be defined in which the applied value is equal to the estimated value. In this manner, the first network participant can be provided with an appropriate degree of confidence in the estimated value.

In preferred embodiment, the transaction request identifies a previous event. For example, the transaction request may identify a purchase by the first network participant. In this manner, the transaction can be linked with events outside of the system. For example, the transaction may offer a refund to the first network participant for the already-completed purchase. Accordingly, transactions outside of the system can also be personalised.

In preferred embodiments, the method further comprises modifying the user score in dependence on the transaction request. Accordingly, the user score is updated each time a transaction occurs, allowing it accurately to reflect user behaviour.

In preferred embodiments the transaction request is generated by an application executing on the network device. This application may be a browser, or an application specifically designed for the execution of transaction requests. In one preferred embodiment, the application is arranged to generate the transaction request in dependence on a quick response code. For example, a customer may be provided with access to a quick response code after a product is purchased offline, and this code can then be used to offer a personalised reward or refund to the customer.

According to a second aspect of the invention, there is provided a method for facilitating transactions, comprising
- maintaining an account for a network participant, the account being associated with a user score determined at least in part on behaviour of the network participant;
- receiving a value request from a network device associated with the network participant, the value request identifying a desired transaction;
- calculating a value of the transaction in dependence on the user score, and
- transmitting the value of the transaction to the network device.

According to the second aspect, a value for a transaction can be generated and provided to a network device associated with a network participant. The value depends on a user score that depends at least in part on the network participant's behaviour. The value can then be used when the transaction is undertaken, or may simply serve as an indication of the likely value of the transaction. Preferred features of the first aspect may apply equally to the second aspect.

According to a third aspect of the present invention, there is provided a system comprising:
- a transaction server arranged to maintain a first account for a first network participant and a second account for a second network participant;
- a scoring server arranged to maintain a user score associated with the first account, the user score being determined at least in part on behaviour of the first network participant;
- a network device arranged to generate a transaction request defining a transaction between the first and second network participants,
- wherein, on receipt of a transaction request, the transaction server is arranged to apply the transaction request to the first and second accounts, wherein an applied value of the transaction applied to the first and second accounts is calculated in dependence on the user score.

According to a fourth aspect of the present invention, there is provided a system comprising:
- a transaction server arranged to maintain an account for a network participant,
- a scoring server arranged to maintain a user score associated with the account, the user score being determined at least in part on behaviour of the network participant;
- wherein, on receipt of a value request from a network device associated with the network participant, the value request identifying a desired transaction, the scoring server is arranged to calculate a value of the transaction in dependence on the user score and to transmit the value of the transaction to the network device.

It can be appreciated that the invention can be implemented using computer program code. Indeed, according to a further aspect of the present invention, there is therefore provided a computer program product comprising computer executable instructions for carrying out the method of the first or second aspects. The computer program product may be a physical storage medium such as a Read Only Memory (ROM) chip. Alternatively, it may be a disk such as a Digital Versatile Disk (DVD-ROM) or Compact Disk (CD-ROM). It could also be a signal such as an electronic signal over wires, an optical signal or a radio signal such as to a satellite or the like. The invention also extends to a processor running the software or code, e.g. a computer configured to carry out the method described above.

### Brief Description of the Figures

Preferred embodiments of the present invention will now be described with reference to the accompanying drawings, in which:
Figure 1 illustrates a system that may be used in accordance with a first embodiment of the present invention; and
Figure 2 is a sequence diagram showing the process by which a network participant may enter into a transaction.

### Detailed Description

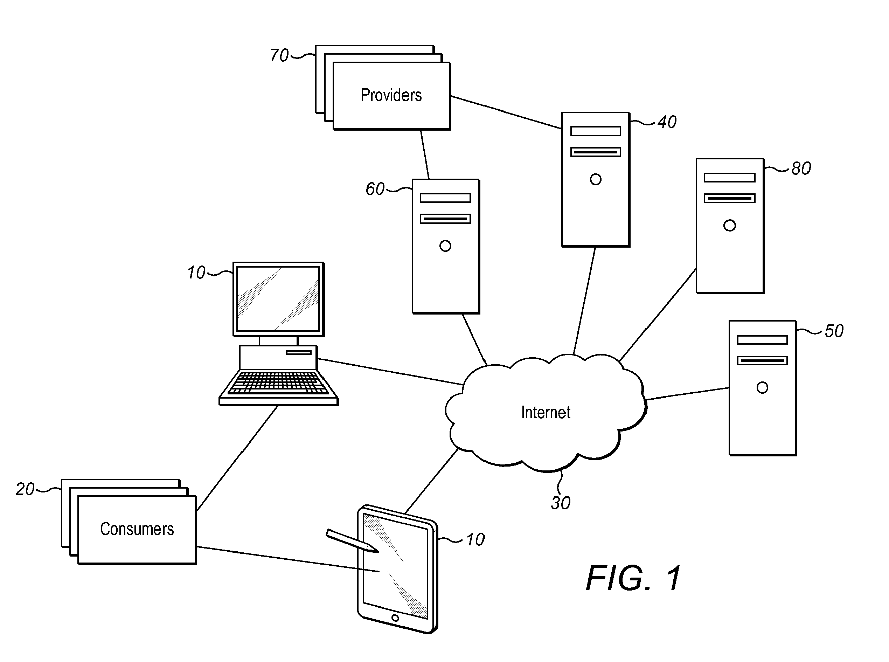

Referring to Figure 1, there is shown a system for use in the implementation of a preferred embodiment of the present invention. One or more network devices 10 are under the control of first network participants 20. The network devices 10 in this example are client terminals connected via a network 30 to a content server 40, an ad server 60, a transaction server 50 and a scoring server 80. The content server 40 and the ad server 60 are under the control of second network participants 70.

The first and second network participants 20, 70, or a single network participant may take both positions either simultaneously or at different times. The distinction is drawn in Figure 1 for convenience only, in order to allow description of a transaction between different network participants. To avoid ambiguity in the following discussion, the first network participants 20 will be referred to hereinafter as consumers 20 while the second network participants will be referred to hereinafter as providers 70. The consumers 20 may, for example, be individuals while the providers 70 may be economic entities, although this is not essential. By utilising the system of Figure 1, as will be described below, the consumers 20 can initiate transactions with the providers 70.

It should also be recognised that providers 70 need not necessarily be associated with either content servers 40 or ad servers 60, but may instead simply have a relationship with the transaction server 50 in which an account is stored for them.

In the preferred embodiment, the consumers 20 are individuals operating client terminals 10 on which applications execute. Network devices such as the client terminals 10 may take various form factors and may have various capabilities. Client terminals 10 that may be used in accordance with the present invention include personal computers (PCs), laptops, mobile phones, tablet devices and internet-connected televisions. Client terminals are not limited to such examples, however, and may include other network-enabled appliances or devices. For example, the client terminal 10 may take a distributed form across a number of networked elements. The client terminals 10 preferably include user interfaces to allow the consumers 20 to interact with the client terminals 10 as appropriate. The user interface may take the form of a keyboard, remote control, pointing device, touchscreen or any other interface as appropriate. The client terminals 10 may comprise a display which can be used to display, for example, web pages, applications, games, video and/or other content to the consumer 20. Applications executed by the client terminal 10 may include a web browser and one or more further network-connected applications.

The network 30 is typically the internet, although it may be any other suitable communications network allowing interaction between the client terminals 10 and other elements of the system.

The content server 40 and/or the ad server 60 may be conventional computing devices for use as network servers and may comprise a processing unit and a content store. These servers 40, 60 may further comprise a user interface for facilitating control of their functionality. The content server 40 and/or the ad server 60 are associated with the providers 70.

The providers 70 are typically economic entities, although they may be individuals or groups of individuals, who wish to engage in transactions with the consumers and/or each other. A provider 70 may be a content provider associated with the content stored on the content server 40 or may be an advertiser associated with advertisements stored on the ad server 60. A provider 70 may additionally or alternatively provide goods and services through different channels to the system shown in Figure 1. In the following description, for example, the provider 70 offers products for sale to consumers 20 in a store.

The system of Figure 1 allows transactions to occur between these entities and the consumers 20, allowing consumers 20 to make payments to the providers 70, and moreover to receive payment from the providers 70. Consumers 20 and providers 70 may also engage in transactions which do not require payment (effectively, transactions in which the payment is zero) by utilising the system of Figure 1.

The transaction server 50 maintains accounts for each consumer 20 and for each provider 70. Maintaining the accounts comprises storing account details which may include identification information, such as account numbers, contact details, user names, passwords, and/or other data. The account details may also include an account balance which reflects the available amount in each account. The account details may also include details of past and present transactions. Both consumers 20 and providers 70 may typically access the transaction server 50 via an online portal to manage their accounts, and in particular to add and withdraw funds to/from the account. This can be done using conventional payment mechanisms, such as via credit/debit card or online banking. Once funds have been placed in the consumer's or provider's account, they can be used for further transactions with other network participants within the system. The funds in the accounts held by the transaction server may be denominated in any appropriate unit, which may, for example, relate to currencies issued by national or regional authorities in a fixed manner. In the example described herewith, the unit in which the accounts are denominated is the "milli", which is defined to be equivalent to 1/1000th of a United States dollar.

It is also possible for transactions between providers 70 and consumers 20 to be carried out by more conventional transaction systems, such as online credit card payment mechanisms or other transaction environments. In such cases, the transaction server 50 includes the necessary systems for such transaction to take place. In such cases, the transaction server 50 may be distributed across multiple entities, which may separately hold accounts for the consumers 20 and the providers 70. There may be various clearing and authentication systems provided within the transaction server 50 to allow these entities to communicate and satisfactorily settle transactions between these accounts.

The scoring server 80 maintains a user score for each consumer 20 that is associated with their account details. The user score may reflect activity, particularly online activity, of the consumer 20. For example, the user score may reflect details such as recent transactions made by the consumer 20 and/or earnings received by the consumer 20. In particular, the user score may reflect transactions between the consumer 20 and providers 70 in the system. This can be implemented by updating the user score in response to the transaction request. The consumer 20 may have control over what details of their transactions are stored in their user score. Recording of these transactions may be limited to time periods during which the consumer 20 is logged in to the system. The user score can be used to determine the value of transactions between the consumers 20 and the providers 70. For example, when a transaction occurs the user score may be applied to calculate a value for the transaction which is then implemented. The user may have different scores for each of the providers 70.

The transaction server 50 presents an application programming interface (API) accessible across the network 30. In this way, applications operating on the client terminals 10, content server 40 and ad server 60 can communicate with the transaction server 50 appropriately. For example, these entities, if suitably verified, can access the account details stored on the transaction server 50, or may initiate transactions by forwarding appropriate requests to the transaction server 50. If desired, consumers 20 may set limits on the sharing of their account details in this way.

Although each of the content server 40, the transaction server 50, the ad server 60 and the scoring server 80 are illustrated in Figure 1 as single entities, it will be appreciated that they may be implemented across a distributed range of devices. For example, the transaction server 50 or the scoring server 80 may be implemented across a range of separate networked devices. Similarly, elements such as the transaction server 50 and the scoring server 80 may not be physically separated in certain circumstances, and may both operate from the same hardware.

As well as transferring funds into the accounts managed by the transaction server 50, consumers 20 and providers 70 may also transfer funds from these accounts if they so wish. In this way, the consumer 20 or provider 70 may retrieve funds from the transaction server 50 to use in a conventional bank account that can be used for transactions outside of the system. In one implementation, a commission is taken each time funds are added to or removed from the accounts maintained by the transaction server 50 in order to cover the upkeep costs of the system.

So, the system includes a number of network participants (consumers 20 and providers 70) each of which have at least one account maintained by the transaction server 50. As a result, payments can be made directly between network participants in the system (i.e. without intermediaries) for goods and/or services (including content and data) by reconciling these in the accounts maintained by the transaction server 50.

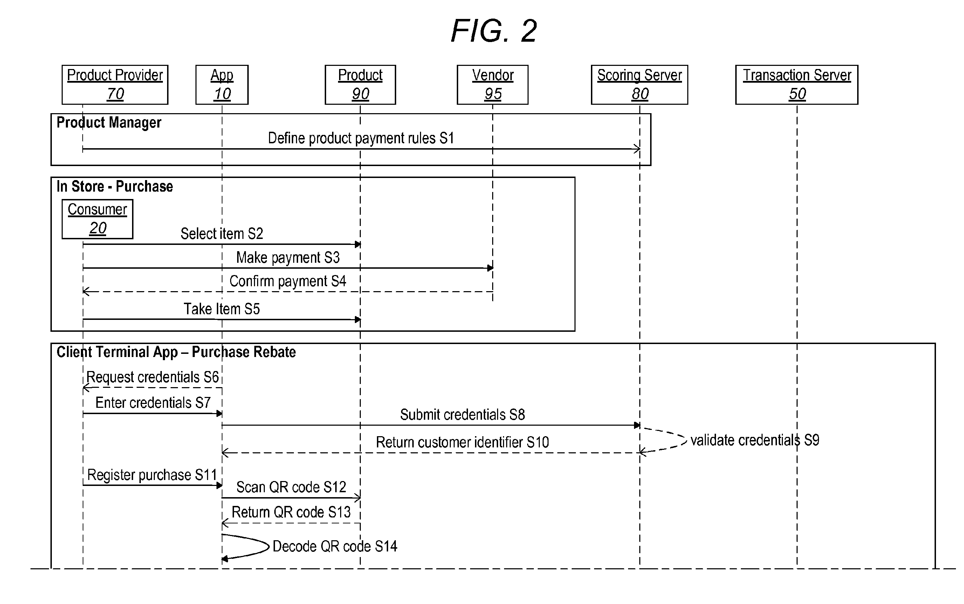

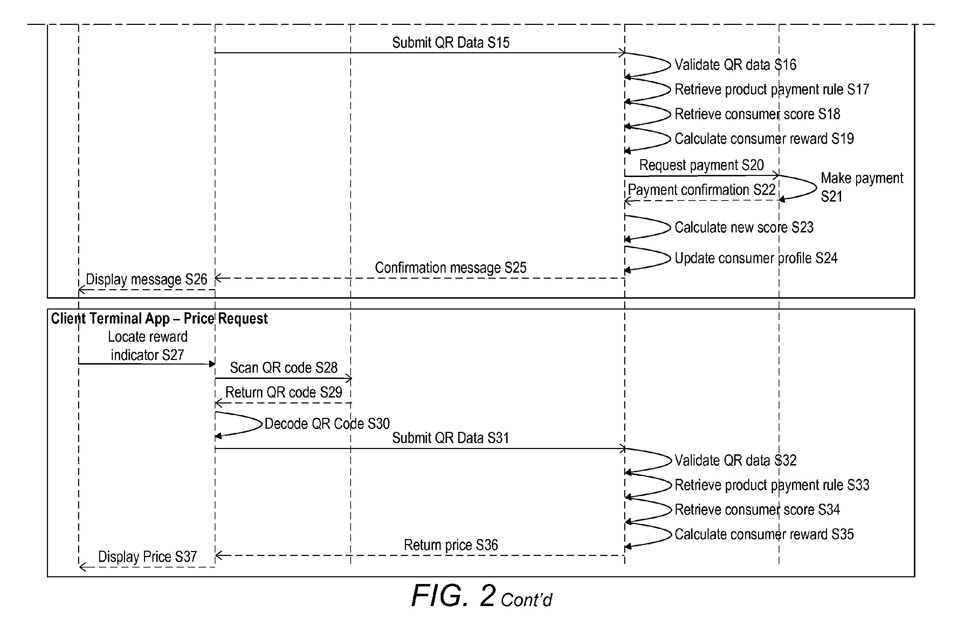

An operation of the system of Figure 1 to implement a transaction can be understood with reference to Figure 2. In this example, a consumer 20 first purchases a product 90 associated with a provider 70 offline in a store 95. This purchase itself does not require the use of the system outlined above, but the user is able to receive a personalised reward for the purchase by carrying out a transaction using that system after the purchase has been completed.

At step s1, the provider 70 defines a value algorithm at the scoring server 80. This value algorithm defines how the value of a certain transaction (in this case, the consumer's 20 reward) will be calculated. An input to this calculation will be the consumer's 20 user score. The transaction algorithm may also be a function of time or location, thus optimising the value of the reward to a specific consumer 20 at a particular time and in a defined place. Thus, the value of the transaction may be personalised.

Once the transaction algorithm is established the process may start with the consumer 20 choosing the product 90, at step s2. At step s3, the consumer 20 then makes a payment to the store 95, which is then confirmed to the consumer at step s4. Having purchased the product 90, the consumer 20 is now free to take it from the store 95 at step s5.

At this stage, the consumer's purchase has proceeded in the conventional manner. However, the consumer 20 in this example is aware that a personalised reward is available. This reward may take the form of a rebate for a proportion of the cost. The consumer may have been informed of this through a general information campaign, or through the packaging of the product, for example. Although shown in Figure 2 after the in-store purchase, the consumer 20 may also have obtained from the scoring server 80 an indication of their likely reward before making the purchase. This indication is an estimated transaction value which may simply reflect the value of the transaction were it to have occurred at that time, but in other embodiments may have some control over the transaction value that is ultimately applied, as will be described below.

When the consumer 20 wishes to obtain their reward, they launch an application on the client terminal 10. The client terminal 10 at step s6 requests credentials (such as a username and password), and at step s7 receives them from the consumer 20. The credentials are then transmitted to the scoring server 80 at step s8 where they are validated at step s9.

At step s10 the scoring server 80 returns a customer identifier to the client terminal 10. At this stage the scoring server 80 may also provide account details such as the account balance reflecting the balance of the account associated with the consumer 20 if the scoring server 80 has access to such information.

The consumer 20 is now logged in to the application running at the client terminal 10 and ready to carry out the transaction to receive the personalised reward for the product 90 they have purchased. The consumer 20 indicates a desire to register such a transaction, and the application at the client terminal at step s11 indicates that the QR code on the product 90 should be scanned. The QR code may be located in a position on the product 90 or the packaging for the product which cannot be accessed until purchase has been made such that measurement of a valid QR code can act as proof of purchase. The QR code is scanned by a digital camera provided in the client terminal 10 at step s12, and the QR code is returned to the client terminal 10 at step s13. The application at the client terminal 10 then reads the QR code at step s14. In step s12, alternative ways of scanning the QR code are possible, such as with a reading device that is connected to the client terminal 10.

The QR code can then be transmitted from the client terminal 10 to the scoring server 80 at step s15. The scoring server 80 can infer the desired transaction from the QR code. Thus, the QR code acts as a transaction request from the client terminal 10 to the scoring server 80. It will be understood that the QR code is just one identifier that may be used in accordance with the process described above. In other preferred embodiments, a radio frequency identification (RFID) signal may be read to identify the purchase for example. Alternatively, the consumer may manually provide details of the purchase. The transaction request provided at this stage should identify the desired transaction between the consumer 20 and the provider 70.

On receiving the QR code, the scoring server 80 first validates that it is genuine, at step s16. This may comprise checking the QR code against a database of legitimate codes. A QR code may be invalidated once it has been processed by the scoring server 80.

The QR code identifies the desired transaction and thus allows the scoring server to retrieve, at step s17, the value algorithm stored at step s1 above. The scoring system further retrieves the user score for the consumer 20 at step s18. The step of retrieving the user score may comprise using the customer identifier referred to at step s10, which may be transmitted with the QR code at step s16. The user score can then be applied to the value algorithm to calculate a value for the transaction at step s19. In this case, the value represents the reward the consumer 20 will receive.

Where an estimated transaction value has earlier been calculated, this may have a limiting effect on the applied transaction value. For example, the applied transaction value may be limited by the estimated transaction value, either such that the applied transaction value does not exceed the estimated transaction value or does not fall below it. This limiting effect may operate for a defined time period from the point at which the estimated transaction value is calculated. For example, a consumer 20 may obtained an estimated value for a reward, and may be confident that the applied value in practice for that reward will at least match the estimated value as long as the transaction takes place within a defined time period.

At step s20, a transaction request is sent to the transaction server 50 by the scoring server 80. The transaction request identifies the consumer 20, the provider 70 of the product 90 and the value of the transaction. The transaction can then be implemented by the transaction server 50 at step s21. In particular, the transaction server 50 increases the account associated with the consumer 20 by the calculated value of the transaction and decreases the account associated with the provider 70 accordingly.

In preferred embodiments, the transaction server 50 implements the transaction using the details provided by the scoring server 80. However, it is recognised that some payment mechanisms will require specific authentication details to be provided by one or both of the consumer 20 and the provider 70. There may therefore be additional steps for such transaction details to take place. In all circumstance, however, the applied value of the transaction is determined in dependence on the user score of the consumer 20.

Confirmation that the transaction has been completed is then forwarded to the scoring server 80 at step s22. At step s23, the scoring server calculates a new user score for the consumer 20. At step s24, further consumer details, such as a consumer account or consumer profile, may also be updated.

At step s25, a confirmation message is returned to the client terminal 10, and this is then displayed to the consumer 20 at step s26. As such, the consumer 20 has completed a reward transaction that is personalised according to their user score. While the consumer 20 is aware that the user score is based on their previous activities, the consumer 20 is willing to allow this information to be shared as they are receiving value for it directly.

As previously referred to, prior to the in-store 95 purchase of product 90, the consumer 20 may also have obtained from the scoring server 80 an indication of their likely reward before making the purchase. To receive this indication at step s27 the consumer 20 locates the reward indicator associated with product 90. Such reward indicator may be a QR code located on the product 90 packaging in an area which is accessible prior to purchase, such as on the outside packaging. At step s28 the consumer 20 scans the reward indicator code using a digital camera operating at the client terminal 10. In other embodiments the reward indicator will be read using other means. At step s29 the product 90 returns the reward indicator code to the application operating at the client terminal 10, which at step s30 reads the reward indicator code.

The reward indicator QR code can then be transmitted from the client terminal 10 to the scoring server 80 at step s31. The scoring server 80 can infer the desired transaction from the QR code. Thus, the QR code acts to identify the desired transaction to the scoring server 80. It is used to request an estimated value for a transaction and may thus be understood as a value request. It will be understood that the QR code is just one identifier that may be used in accordance with the process described above. In other preferred embodiments, a radio frequency identification (RFID) signal may be read to identify the purchase for example. Alternatively, the consumer may manually provide details of the purchase. The communication provided at this stage should identify the desired transaction between the consumer 20 and the provider 70.

On receiving the reward indicator QR code, the scoring server 80 first validates that it is genuine, at step s32. This may comprise checking the QR code against a database of legitimate codes.

The reward identifier QR code identifies the desired transaction and thus allows the scoring server to retrieve, at step s33, the value algorithm stored at step s1 above. The scoring system further retrieves the user score for the consumer 20 at step s34. The step of retrieving the user score may comprise using the customer identifier referred to at step s10, which may be transmitted with the QR code at step s32. The user score can then be applied to the value algorithm to calculate an estimated value for the transaction at step s35. In this case, the value represents an indication of the reward the consumer 20 would receive upon purchase of product 90. Indeed, the reward could be very specifically tied to the purchase of the product in this particular location at a particular time.

At s36 the reward indication value is returned to the application operating at the client terminal 10, and at step s37 it is displayed by the client terminal 10 to the consumer 20. The consumer 20 can at this point decide whether or not to purchase the product 90 given the price of product 90 in store 95 and the indication of reward provided at step s36.

In the above example, the purchase of the product 90 is separated from the process of the reward. Thus the transaction comprises a payment from the provider 70 to the consumer 20. However, it will be appreciated that the purchase of a product or service may also be effected online, in which case payment may be made from the consumer 20 to the provider 70, but the value of this transaction can still be optimised according to the user score.

The above example relates to a direct reward for a previous purchase of a product. However, in other examples, alternative transactions may be implemented with a transaction value calculated in dependence on the user score for the consumer 20. For example, the purchase of the product may take place online, so that the reward is implemented directly in the purchase transaction. Alternatively, a reward may be offered in dependence on the user score for the consumer 20 providing feedback on their purchase. Indeed, no purchase is necessary, a consumer 20 may be provided with a reward for simply viewing some online content or providing information. In all cases, however, the value of the transaction is determined at least in part in dependence on the user score for that consumer 20.

As transactions take place, the user score can be updated, as described above. Accordingly, the user score may depend on the consumer's 20 transaction history. This may be considered in isolation but there may also be more complex relationships. For example, a transaction request received by the scoring server 80 may identify previous events. This can be done directly, through the explicit provision of certain information, or the previous event can be inferred from the presence of the transaction request. There may be multiple steps involved in inferring the previous event from the transaction request; for example, the request may allow the relevant value algorithm to be identified, and this value algorithm may reference the previous event. In the embodiment described above, this event is the purchase of the product 90.

Multiple events may be linked in the development of the user score. For example, information can be obtained about whether a given consumer 20 is likely to provide feedback after the purchase of a product. This information can be used to adjust the value of the transaction (i.e. the reward for certain behaviour) involved in providing feedback for that consumer if desired.

It can also be recognised that the provider 70 may also have a user score, equivalent to that of the consumer 20. The value algorithm that calculates either the estimated or applied value of a transaction may take into account the user scores of both the consumer 20 and the provider 70. Thus, the provider's 70 user score may provide further optimisation of the value of a transaction based on the current circumstances or previous history of the provider 70.

Other variations and modifications will be apparent to the skilled person. Such variations and modifications may involve equivalent and other features which are already known and which may be used instead of, or in addition to, features described herein. Features that are described in the context of separate embodiments may be provided in combination in a single embodiment. Conversely, features which are described in the context of a single embodiment may also be provided separately or in any suitable sub-combination.

It should be noted that the term "comprising" does not exclude other elements or steps, the term "a" or "an" does not exclude a plurality, a single feature may fulfil the functions of several features recited in the claims and reference signs in the claims shall not be construed as limiting the scope of the claims. It should also be noted that the Figures are not necessarily to scale; emphasis instead generally being placed upon illustrating the principles of the present invention.

## Claims

1. A method for facilitating online transactions, comprising:
- maintaining a first account for a first network participant, the first account being associated with a user score determined at least in part on behaviour of the first network participant;
- maintaining a second account for a second network participant;
- receiving a transaction request from a network device associated with the first network participant, the transaction request defining a transaction between the first and second network participants; and
- applying the transaction request to the first and second accounts, wherein an applied value of the transaction applied to the first and second accounts is calculated in dependence on the user score.

2. A method according to claim 1, further comprising the steps of
calculating, prior to the receipt of the transaction request, an estimated value of the transaction in dependence on the user score, and
transmitting the estimated value to the network device.

3. A method according to claim 2, wherein a time period is defined in which the applied value is limited by the estimated value.

4. A method according to any preceding claim, wherein the transaction request identifies a previous event.

5. A method according to claim 4, wherein the previous event is a purchase by the first network participant.

6. A method according to any one of the preceding claims, further comprising the step of modifying the user score in dependence on the transaction request.

7. A method according to any one of the preceding claims, wherein the transaction request is generated by an application executing on the network device.

8. A method according to claim 7, wherein the transaction request is generated in dependence on a quick response code.

9. A method for facilitating transactions, comprising
- maintaining a first account for a first network participant, the first account being associated with a user score determined at least in part on behaviour of the first network participant;
- calculating an estimated value of a transaction in dependence on the user score, and
transmitting the estimated value to the network device.

10. A system comprising:
- a transaction server arranged to maintain a first account for a first network participant and a second account for a second network participant;
- a scoring server arranged to maintain a user score associated with the first account, the user score being determined at least in part on behaviour of the first network participant;
- a network device arranged to generate a transaction request defining a transaction between the first and second network participants,
- wherein, on receipt of a transaction request, the transaction server is arranged to apply the transaction request to the first and second accounts, wherein an applied value of the transaction applied to the first and second accounts is calculated in dependence on the user score.

11. A system comprising:
- a transaction server arranged to maintain an account for a network participant,
- a scoring server arranged to maintain a user score associated with the account, the user score being determined at least in part on behaviour of the network participant;
- wherein, on receipt of a value request from a network device associated with the network participant, the value request identifying a desired transaction, the scoring server is arranged to calculate an estimated value of the transaction in dependence on the user score and to transmit the value of the transaction to the network device.
